# EUROPÄISCHE PATENTSCHRIFT

(11) **EP 0 501 973 B1**
(45) Veröffentlichungstag und Bekanntmachung des Hinweises auf die Patenterteilung: **12.01.1994**
(21) Anmeldenummer: 90915763.8
(22) Anmeldetag: 27.10.1990
(51) Int. Cl.: A23G 9/22, A23G 9/16

(54) **VERFAHREN UND VORRICHTUNG ZUR HERSTELLUNG VON SPEISEEIS**
PROCESS AND DEVICE FOR THE PRODUCTION OF EDIBLE ICE
PROCEDE ET DISPOSITIF POUR LA PREPARATION DE GLACES ALIMENTAIRES

(30) Priorität: 24.11.1989 DE 3938904
(43) Veröffentlichungstag der Anmeldung: 09.09.1992
(73) Patentinhaber: HUGO KUNZI KOMMANDITGESELLSCHAFT, D-70469 Stuttgart (DE)
(72) Erfinder: KUNZI, Hugo, D-7000 Stuttgart 30 (DE); KUNZI, Reiner, D-7000 Stuttgart 30 (DE)
(74) Vertreter: Wolf, Eckhard, Dr.-Ing.
(86) Internationale Anmeldenummer: EP9001920
(87) Internationale Veröffentlichungsnummer: WO9107878

(56) Entgegenhaltungen:
- WO-A-88/07330
- DE-C- 849 562
- FR-A- 940 308
- FR-A- 2 216 011
- FR-A- 2 227 504
- FR-A- 2 472 347
- GB-A- 513 417
- US-A- 1 369 053
- US-A- 1 701 764

## Beschreibung

Die Erfindung betrifft ein Verfahren und eine Vorrichtung zur Herstellung von Speiseeis gemäß Oberbegriff der Patentansprüche 1 bzw. 14.

Eine bekannte Speiseeisbereitungsmaschine dieser Art (DE-OS 28 32 878) weist einen mantelseitig gekühlten, feststehenden zylindrischen Gefrierbehälter und ein darin rotierendes Misch- und Abstreifwerkzeug auf. Das Misch- und Abstreifwerkzeug weist zwei im Winkelabstand voneinander angeordnete, in Umfangsrichtung des Gefrierbehälters gleichsinnig ausgerichtete, sich über die Länge des Gefrierbehälters erstreckende, mit einer in Längsrichtung abschnittsweise unterbrochenen keilförmigen Abstreifkante unter einem schrägen Anstellwinkel gegen die Mantelinnenfläche des Gefrierbehälters andrückbare und dabei mit ihrer Vorderfläche schräg in das Behälterinnere weisende Misch- und Abstreifblätter auf. Die Misch- und Abstreifblätter sind an ihren Enden an paarweise in axialem Abstand radial über eine koaxial im Gefrierbehälter gelagerte motorgetriebene Welle überstehenden Auslegern befestigt. Die Misch- und Abstreifblätter sind dort mit je einer Stützplatte fest verbunden, die ihrerseits am zugehörigen Ausleger in Klemmeinrichtungen in stufenlos einstellbaren Abständen von der Welle radial festlegbar sind. Damit ist es möglich, daß nach einer gewissen Betriebszeit die Misch- und Abstreifblätter in bezug auf den Gefrierbehälter infolge Abnutzung dieser zusammenwirkenden Teile nachgestellt werden können. Die Nachstellung erfolgt von Hand, indem Klemmschrauben an der Klemmvorrichtung gelöst, die Misch- und Abstreifblätter in Richtung Mantelinnenfläche vorgeschoben, geeignete Beilagstücke eingefügt und die Klemmschrauben wieder angezogen werden. Sobald die Nachstellung durchgeführt ist, können die Beilagstücke wieder entfernt werden. Diese Art der Nachstellung ist relativ umständlich und zeitaufwendig. Abgesehen davon wird bei der bekannten Vorrichtung als nachteilig empfunden, daß die Eismasse bei jeder Drehung des Misch- und Abstreifwerkzeugs im Bereich der Unterbrechungen innerhalb der Abstreifkante des einen Misch- und Abstreifblattes auf der gekühlten Mantelfläche angestreift und sogleich von der Abstreifkante des anderen Misch- und Abstreifblattes wieder abgestreift wird. Die Anstreifphase und damit die Verweilzeit des betreffenden Teils der Eismasse beträgt daher nur den Bruchteil einer Sekunde. Da bei diesem Vorgang keine ausreichende Verdichtung der angestreiften Eismasse erzielt wird und durch den ständigen Wechsel des An- und Abstreifens Reibungswärme in die Eismasse eingetragen wird, lassen der Abkühlvorgang, die erreichbare Temperatur und die Qualität des mit der bekannten Vorrichtung hergestellten Speiseeises zu wünschen übrig. Hinzu kommt, daß die durch die Unterbrechungen gebildeten Durchlaßöffnungen vor allem bei fortgeschrittener Verfestigung der Eismasse zur Verstopfung neigen und ein Anstreifen dadurch unmöglich machen können.

FR-A-940 308 beschreibt eine Vorrichtung zur Eisherstellung, welche zwei Abstreifwerkzeuge besitzt, und welche in zwei Drehrichtungen angetrieben werden kann. Ziel der erwähnten Umkehrung der Drehrichtung ist es, die Kühlung der eingeleiteten, flüssigen Creme zu beschleunigen.

Ausgehend hiervon liegt der Erfindung die Aufgabe zugrunde, ein Verfahren und eine Vorrichtung zur Herstellung von Speiseeis zu entwickeln, womit der Abkühlvorgang gegenüber bekannten Verfahren beschleunigt und die Qualität des fertigen Speiseeises verbessert werden kann.

Zur Lösung dieser Aufgabe werden die in den Patentansprüchen 1 bzw. 14 angegebenen Merkmalskombinationen vorgeschlagen. Weitere vorteilhafte Ausgestaltungen und Weiterbildungen der Erfindung ergeben sich aus den abhängigen Ansprüchen.

Die erfindungsgemäße Lösung geht von dem grundlegenden Gedanken aus, daß Teile der Eismasse abwechselnd in getrennten Verfahrensschritten während mehrerer Umdrehungen des Misch- und Abstreifwerkzeugs an der Kühlfläche angestreift und anschließend während einer oder mehrerer Umdrehungen von der Kühlfläche abgestreift werden. Die Eismasse kann beim Anstreifvorgang verdichtet und/oder geknetet werden, so daß ein optimaler Wärmeübergang zur Kühlfläche gewährleistet ist. Die angestreifte Eismasse weist dabei zweckmäßig eine Schichtdicke von 4 - 8 mm auf, die sich während der Anstreifphase bis tief in die Schicht hinein abkühlen kann. Vorteilhafterweise dauert die Anstreifphase länger als die Abstreifphase, wobei sich als besonders vorteilhaft eine Dauer der Anstreifphase von 5 - 15 s, vorzugsweise 8 - 10 s erwiesen hat, während die Abstreifphase 4 - 8 s, vorzugsweise 5 - 6 s dauern sollte. Um einen guten Temperaturausgleich mit der übrigen Eismasse zu erzielen, werden die an der Kühlfläche abgestreiften Eismasseteile noch während der Abstreifphase in das Innere der Eismasse gefördert und mit dieser vermischt.

Gemäß einer bevorzugten Ausgestaltung der Erfindung wird die Eismasse in einander entgegengesetzten Drehrichtungen an der Kühlfläche an- und abgestreift, wobei zur optimalen Nutzung der Kühlfläche die Eismasse beim An- und Abstreifen zusätzlich quer zu den Drehrichtungen nach einander entgegengesetzten Richtungen über die Kühlfläche verschoben werden kann.

Weiter hat es sich als vorteilhaft erwiesen, wenn die Geschwindigkeit bzw. die Drehzahl des Misch- und Abstreifwerkzeugs während der An- und Abstreifphase unabhängig eingestellt werden kann. Insbesondere ist es wichtig, daß die Eismasse im Zuge einer jeden Anstreifphase mit variabler Geschwindigkeit an der Kühlfläche angestreift wird. Wenn die Eismasse zunächst unter schneller Relativdrehung des Misch- und Abstreifwerkzeugs und anschließend unter langsamerer Relativdrehung auf die Kühlfläche aufgetragen wird, wird erreicht, daß auch bei fortgeschrittener Verfestigung der Eismasse eine ausreichende Eismassemenge unter der Einwirkung der Zentrifugalkraft zur Kühlfläche gelangt, um anschließend bei der langsameren Relativdrehung geknetet und verdichtet werden zu können. In der Anfahrphase ist es jedoch zweckmäßig, den Anstreifvorgang mit langsamerer Relativdrehung zu beginnen.

Die Drehzahl beim Abstreifvorgang ist dagegen so zu wählen, daß das Misch- und Abstreifwerkzeug unter der Einwirkung der Fliehkraft und ggf. einer Federkraft ausreichend fest gegen die Kühlfläche gepreßt wird, um ein wirksames Abstreifen der an der Kühlfläche anhaftenden Eismasse zu gewährleisten.

Bei einer bevorzugten Vorrichtung zur Durchführung des erfindungsgemäßen Verfahrens ist die motorgetriebene Welle des Misch- und Abstreifwerkzeugs in ihrer Drehrichtung umkehrbar, während die Misch- und Abstreifblätter um zur Rotationsachse der Welle exzentrische Gelenkachsen schwenkbar an den Auslegern des Misch- und Abstreifwerkzeugs angelenkt sind und durch Verschwenken um die Gelenkachsen unter Freilassung eines im Bereich ihrer Rückflächen sich zur Abstreifkante hin verjüngenden Spalts durch einen Anschlag begrenzt von der Mantelinnenfläche des Gefrierbehälters abhebbar sind. Durch diese Maßnahmen wird gewährleistet, daß das Misch- und Abstreifwerkzeug in der einen Drehrichtung im Abstreifmodus und in der umgekehrten Drehrichtung im Anstreifmodus betrieben wird. Im Abstreifmodus werden die Misch- und Abstreifblätter unter der Einwirkung der Zentrifugalkraft und ggf. einer Feder so gegen die Mantelinnenfläche gepreßt, daß die keilförmige Abstreifkante unter einem Anstellwinkel auf die an der Mantelinnenfläche haftende Eismasse abstreifend einwirkt. Umgekehrt werden während der Anstreifphase die Misch- und Abstreifblätter unter der Einwirkung der durch Flieh- und Haftkräfte an der Mantelinnenfläche gehaltenen Eismasseteile von der Mantelinnenfläche abgehoben. Dabei gelangen die betreffenden Eismasseteile durch den sich zur Abstreifkante hin verjüngenden Keilspalt hindurch und werden unter Verdichtung gegen die Mantelinnenfläche gepreßt. Die Spaltweite zwischen den gegen den Anschlag anliegenden abgehobenen Misch- und Abstreifblättern und der Mantelinnenfläche des Gefrierbehälters beträgt an der vorzugsweise im Bereich der Abstreifkante befindlichen engsten Stelle zweckmäßig zwischen 3 und 12 mm, vorzugsweise 5 - 7 mm.

Vorteilhafterweise sind die Misch- und Abstreifblätter gleichsinnig gegenüber der Wellenachse geneigt und weisen eine zur einen Stirnseitenwand des Gefrierbehälters hin geneigte Vorderfläche und eine zur anderen Stirnseitenwand hin geneigte Rückfläche auf. Vorteilhafterweise sind die Misch- und Abstreifblätter mit an ihren Enden in Umfangsrichtung des Gefrierbehälters gleichsinnig überstehenden hebelartigen Lagerlappen an den Auslegern schwenkbar gelagert.

Nach einer ersten vorteilhaften Variante sind die den einzelnen Misch- und Abstreifblättern zugeordneten Ausleger parallel zueinander und die Gelenkachsen parallel zur Wellenachse ausgerichtet, während die beiden Lagerlappen der Misch- und Abstreifbehälter unterschiedlich lang sein können. Nach einer zweiten Variante stehen die den einzelnen Misch- und Abstreifblättern zugeordneten Ausleger im Winkel zueinander über die Welle über, während die Gelenkachsen schräg zueinander und zur Wellenachse ausgerichtet sind. In diesem Falle sind die beiden Lagerlappen der Misch- und Abstreifblätter im wesentlichen gleichlang ausgebildet.

Vorteilhafterweise sind an den beiden Wellenenden einander paarweise diametral gegenüberliegende Ausleger für zwei Misch- und Abstreifblätter angeordnet, wobei an dem einen Wellenende ein weiteres, sich mit dem ersten Auslegerpaar zu einem gegen die zylindrische Mantelinnenfläche des Gefrierbehälters anliegenden Lagerkreuz ergänzendes Auslegerpaar angeordnet ist. Am lagerkreuzseitigen Wellenende und an der diesem zugewandten Stirnwand des Gefrierbehälters sind zweckmäßig zueinander komplementäre, vorzugsweise als Innen- und Außenkonus ausgebildete Zentrier- und/oder Abstandshalteorgane angeordnet. Vorteilhafterweise weist die dem lagerkreuz seitigen Wellenende zugewandte Stirnwand eine mit einem Einfülltrichter verbundene Einfüllöffnung und eine unterhalb der Einfüllöffnung angeordnete verschließbare Auslaßöffnung auf.

Gemäß einer bevorzugten Ausgestaltung der Erfindung weisen die Misch- und Abstreifblätter einen aus den Lagerlappen und einem einstückig mit den Lagerlappen verbundenen Steg gebildeten Metallbügel und eine mit der vorzugsweise unterbrochenen keilförmigen Abstreifkante versehene Stegauflage aus Kunststoff auf.

Im folgenden wird die Erfindung anhand eines in der Zeichnung in schematischer Weise dargestellten Ausführungsbeispiels näher erläutert. Es zeigen
- Fig. 1: einen Schnitt durch eine Eisbereitungsmaschine;
- Fig. 2: einen Schnitt entlang der Schnittlinie 2-2 der Fig. 1;
- Fig. 3: eine schaubildliche Ansicht eines gegenüber Fig. 2 abgewandelten Misch- und Abstreifwerkzeugs.

Die in der Zeichnung dargestellte Speiseeismaschine besteht im wesentlichen aus einem zylindrischen doppelwandigen Gefrierbehälter 10 und einem im Gefrierbehälter drehbar angeordneten Misch- und Abstreifwerkzeug 12. Der Ringraum 14 im doppelwandigen Mantel 16 des Gefrierbehälters 10 ist an den Kühlkreislauf einer nichtdargestellten Kältemaschine angeschlossen und von einem Kältemittel durchströmt. Die vordere, vom Zylindermantel 16 abnehmbare Stirnwand 18 weist in ihrem oberen Teil eine in das Behälterinnere 20 mündende, mit einem nach außen überstehenden Einfülltrichter 22 verbundene Einfüllöffnung 24 sowie eine im unteren Teil angeordnete, durch einen Schwenkdeckel 26 verschließbare Auslaßöffnung 28 auf. Über die rückwärtige Stirnwand 30 steht nach außen eine Lagerbüchse 32 über, in der eine durch einen nicht dargestellten Motor und Getriebemittel antreibbare Antriebswelle 34 in zwei im Abstand voneinander angeordneten Kugellagern 36 gelagert ist. Die Antriebswelle 34 greift mit einem Kupplungsorgan 38 durch eine zentrale Öffnung 40 in der rückwärtigen Stirnwand 30 des Gefrierbehälters 10 hindurch, auf die das komplementäres Kupplungsorgan 42 des Misch- und Abstreifwerkzeugs 12 drehfest aufsteckbar ist.

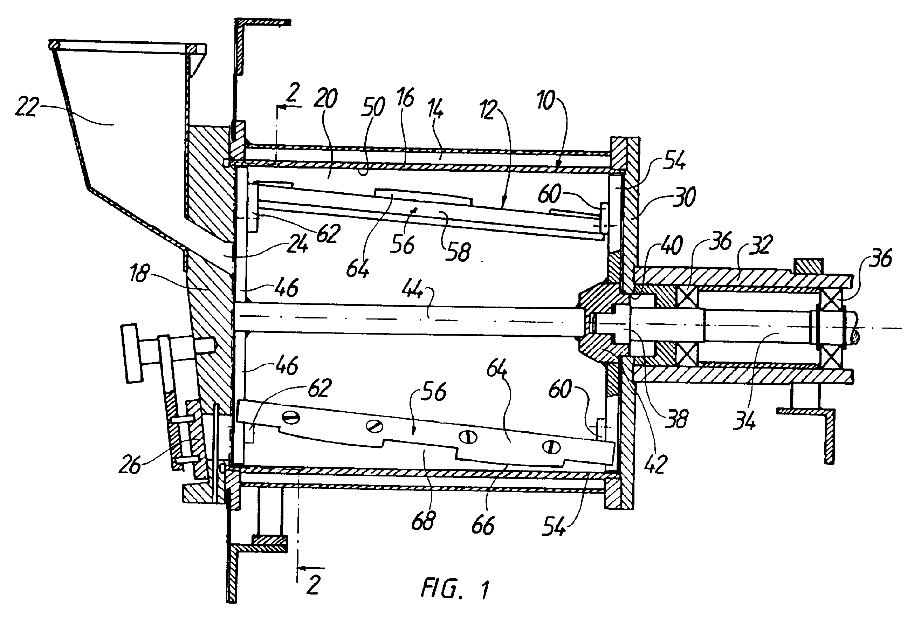

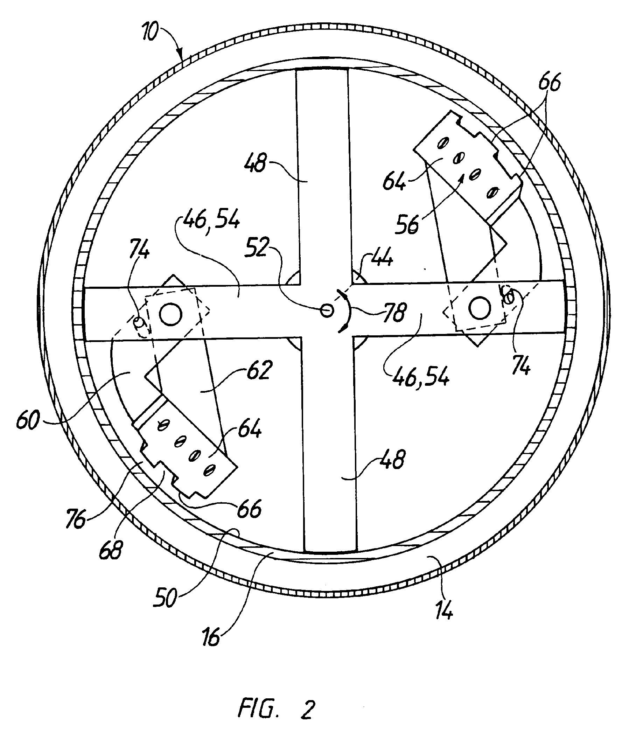

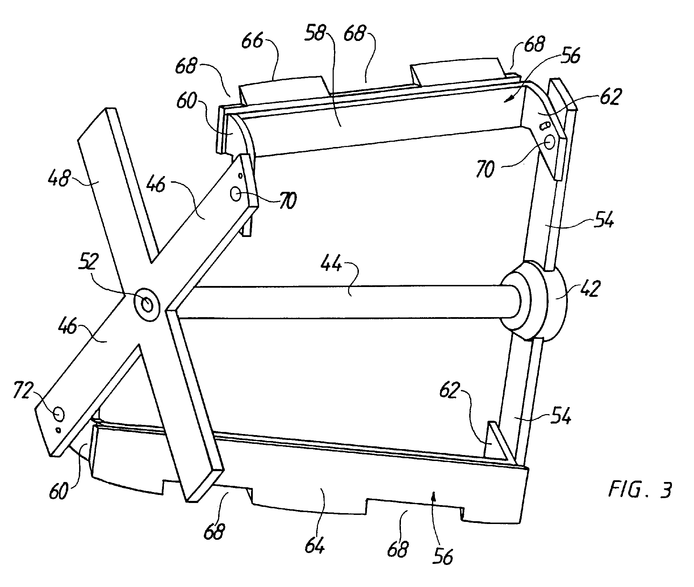

Das Misch- und Abstreifwerkzeug 12 enthält eine mit dem Kupplungsorgan 42 verbundene, innerhalb des Gefrierbehälters 10 koaxial ausgerichtete Welle 44, die an ihrem der vorderen Stirnwand 18 zugewandten Ende mit einem aus zwei zueinander senkrechten Auslegerpaaren 46,48 gebildeten Lagerkreuz an der zylindrischen Innenfläche 50 des Behältermantels 16 gleitend geführt ist. Weiter enthält die Welle 44 an ihrem stirnseitigen Ende einen Innenkonus 52, in den ein an der Stirnwand 18 nach innen überstehender, nicht dargestellter Zapfen als Abstandshalter eingreift. An ihrem kupplungsseitigen Ende weist die Welle 44 zwei weitere, nach entgegengesetzten Seiten radial überstehende Ausleger 54 auf, die im Falle des in Fig. 1 und 2 dargestellten Ausführungsbeispiels zu den Auslegern 46 am anderen Wellenende parallel ausgerichtet und im Falle des in Fig.3 gezeigten Ausführungsbeispiels mit den Auslegern 46 um die Wellenachse 44 einen Winkel einschließen.

Das Misch- und Abstreifwerkzeug 12 weist ferner zwei einander diametral gegenüberliegende, in Drehrichtung des Werkzeugs gleichsinnig ausgerichtete Misch- und Abstreifblätter 56 auf, die aus einem einstückigen, einen Steg 58 und zwei an den Stegenden im wesentlichen senkrecht überstehenden Lagerlappen 60,62 aufweisenden Metallbügel und einer auf der den Lagerlappen 60,62 gegenüberliegenden Seite des Stegs 58 angeordneten Stegauflage 64 aus Kunststoff bestehen. Die Kunststoffauflagen 64 weisen an ihren der Mantelinnenfläche zugewandten Breitseite Abstreifkanten 66 auf, die an Ausschnitten 68 in Längsrichtung unterbrochen sind. Die Ausschnitte 68 der beiden Stegauflagen 64 sind in Längsrichtung versetzt gegeneinander angeordnet, so daß die Abstreifkanten 66 der beiden Blätter 56 axial gegeneinander versetzte Ringbereiche der Mantelinnenfläche 50 überstreichen.

Die Misch- und Abstreifblätter 56 sind mit ihren hebelartigen Lagerlappen 60,62 an miteinander paarweise fluchtend ausgerichteten Gelenkstellen 70,72 der nach der gleichen Seite der Welle 44 überstehenden Ausleger 46,54 begrenzt verschwenkbar angelenkt. Dadurch können die Misch- und Abstreifblätter 56 gegen einen Anschlag 74 mit ihren Abstreifkanten 66 unter Bildung eines Spalts 76 von der Mantelinnenfläche 50 weggeschwenkt werden (Fig. 2).

Wie insbesondere aus Fig. 2 und 3 zu ersehen ist, ist der Steg 58 und damit die durch die Stegauflage 64 gebildete Breitseitenfläche der Misch- und Abstreifblätter 56 schräg zur Achswelle 44 in Richtung Vorderwand 18 ausgerichtet. Dementsprechend sind im Falle des in Fig. 2 gezeigten Ausführungsbeispiels die Lagerlappen 60,62 unterschiedlich lang ausgebildet, während im Falle des in Fig. 3 gezeigten Ausführungsbeispiels die Ausleger 46 und 54 bei etwa gleichlangen Lagerlappen 60,62 einen Winkel miteinander einschließen.

Wie in Fig. 2 durch den Doppelpfeil 78 angedeutet ist, kann die Welle 44 des Misch- und Abstreifwerkzeugs reversierend angetrieben werden. Beim Antrieb im Gegenuhrzeigersinn werden die Misch- und Abstreifblätter 56 unter der Einwirkung der Zentrifugalkraft und unter Berücksichtigung ihrer schrägen Anstellung mit ihren Abstreifkanten 66 gegen die Mantelinnenfläche 50 gepreßt (Abstreifmodus). Durch das selbsttätige Verschwenken der Misch- und Abstreifblätter 56 gegen die Mantelinnenfläche 50 ist zugleich ein automatischer Verschleißausgleich gewährleistet. Bei einer Drehung im Uhrzeigersinn (Fig. 2) werden die Misch- und Abstreifblätter unter Freigabe des Keilspaltes 76 von der Mantelinnenfläche abgehoben (Anstreifmodus).

Die Erfindung bezieht sich auf ein Verfahren und eine Vorrichtung zur Herstellung von Speiseeis, wobei Eismasse durch ein drehendes Misch- und Abstreifwerkzeug 12 an einer zylindrischen Kühlfläche 50 angestreift und von dieser wieder abgestreift wird. Um eine möglichst gute Eisqualität zu erhalten, werden Teile der Eismasse abwechselnd in getrennten Verfahrensschritten während mehrerer Umdrehungen des Misch- und Abstreifwerkzeugs 12 unter Ausübung eines Verdichtungs- und Anpreßdruckes an der Kühlfläche 50 angestreift und anschließend von der Kühlfläche 50 wieder abgestreift und mit der übrigen Eismasse vermischt. Die Erfindung ist nicht auf die Herstellung von Speiseeis beschränkt, sondern erstreckt sich auch auf andere pastöse Massen, die nach dem Speiseeisverfahren verfertigt werden können.

## Patentansprüche

1. Verfahren zur Herstellung von Speiseeis, bei welchem Eismasse durch ein drehendes Misch- und Abstreifwerkzeug gerührt und/oder geschlagen sowie an einer zylindrischen Kühlfläche angestreift und von dieser wieder abgestreift wird, **dadurch gekennzeichnet**, daß Teile der Eismasse alternierend in getrennten Verfahrensschritten während mehrerer Umdrehungen des Misch- und Abstreifwerkzeugs an der Kühlfläche angestreift und anschließend von der Kühlfläche abgestreift werden.

2. Verfahren nach Anspruch 1, **dadurch gekennzeichnet,** daß die Eismasse beim Anstreifen verdichtet und/oder geknetet wird.

3. Verfahren nach Anspruch 1 oder 2, **dadurch gekenn****zeichnet,** daß die abgestreiften Eismasseteile mit der übrigen Eismasse vermischt werden.

4. Verfahren nach einem der Ansprüche 1 bis 3, **dadurch** **gekennzeichnet,** daß die Anstreifphase länger als die Abstreifphase dauert.

5. Verfahren nach einem der Ansprüche 1 bis 4, **dadurch** **gekennzeichnet,** daß die Anstreifphase 5 - 15 s, vorzugsweise 8 - 10 s dauert.

6. Verfahren nach einem der Ansprüche 1 - 5, **dadurch** **gekennzeichnet,** daß die Abstreifphase 4 - 8 s, vorzugsweise 5 - 6 s dauert.

7. Verfahren nach einem der Ansprüche 1 - 6, **dadurch** **gekennzeichnet,** daß die Eismasse mit einer Schichtdicke von 3 - 12 mm, vorzugsweise 5 - 7 mm an der Kühlfläche angestreift wird.

8. Verfahren nach einem der Ansprüche 1 - 7, **dadurch** **gekennzeichnet,** daß die Eismasse in einander entgegengesetzten Drehrichtungen des Misch- und Abstreifwerkzeugs an der Kühlfläche an- und abgestreift wird.

9. Verfahren nach Anspruch 8, **dadurch gekennzeichnet,** daß die Eismasse beim An- und Abstreifen zusätzlich quer zu den Drehrichtungen in einander entgegengesetzten Richtungen über die Kühlfläche verschoben wird.

10. Verfahren nach einem der Ansprüche 1 - 9, **dadurch** **gekennzeichnet,** daß die An- und Abstreifgeschwindigkeit unabhängig voneinander eingestellt wird.

11. Verfahren nach Anspruch 10, **dadurch gekennzeichnet,** daß die Eismasse während einer Anstreifphase mit variabler Geschwindigkeit an der Kühlfläche angestreift wird.

12. Verfahren nach Anspruch 11, **dadurch gekennzeichnet,** daß die Eismasse während der Anstreifphase zunächst unter schneller Relativdrehung und anschließend unter langsamerer Relativdrehung an der Kühlfläche angestreift wird.

13. Verfahren nach Anspruch 12, **gekennzeichnet durch** eine Anfahrphase mit langsamerer Relativdrehung.

14. Vorrichtung zur Herstellung von Speiseeis mit einem mantelseitig gekühlten, vorzugsweise feststehenden Gefrierbehälter (10) und einem darin rotierenden Misch- und Abstreifwerkzeug (12), welches mindestens zwei im Winkelabstand voneinander angeordnete, in Umfangsrichtung des Gefrierbehälters (10) gleichsinnig ausgerichtete, sich über die Länge des Gefrierbehälters (10) erstreckende, mit einer keilförmigen Abstreifkante (66) unter einem schrägen Anstellwinkel gegen die Mantelinnenfläche (50) des Gefrierbehälters (10) andrückbare und dabei mit ihrer Vorderfläche schräg in das Behälterinnere weisende Misch- und Abstreifblätter (56) aufweist, die an paarweise in axialem Abstand voneinander radial über eine koaxiale im Gefrierbehälter (10) gelagerte, motorgetriebene Welle (44) überstehenden Auslegern (46,54) befestigt sind, wobei die motorgetriebene Welle (44) in ihrer Drehrichtung (78) umkehrbar ist und die Misch- und Abstreifblätter (56) um zur Rotationsachse (44) exzentrische Gelenkachsen (70,72) schwenkbar an den Auslegern (46,54) angelenkt sind und durch Verschwenken um die Gelenkachsen (70,72) unter Freilassung eines Spalts (76) durch einen Anschlag (74) begrenzt von der Mantelinnenfläche (50) des Gefrierbehälters (10) abhebbar sind, **dadurch gekennzeichnet,** daß die Misch- und Abstreifblätter (56) beim Abheben von der Mantelinnenfläche (50) einen im Bereich ihrer Rückflächen sich zur Abstreifkante hin verjüngenden Spalt (76) begrenzen, daß die Welle (44) abwechselnd in der einen und der anderen Drehrichtung antreibbar ist und daß die Misch- und Abstreifblätter (56) gemeinsam in der einen Drehrichtung (Abstreifphase) unter der Einwirkung der Zentrifugalkraft und einer gegebenenfalls vorhandenen Federkraft mit ihrer Abstreifkante (66) gegen die Mantelinnenfläche (50) andrückbar und in der anderen Drehrichtung (Anstreifphase) unter der Einwirkung von auf der Mantelinnenfläche (50) haftender Speiseeismasse entgegen der Zentrifugalkraft und der gegebenenfalls vorhandenen Federkraft bis zum Anschlag (74) von der Mantelinnenfläche (50) wegschwenkbar sind.

15. Vorrichtung nach Anspruch 14, **dadurch gekennzeich****net,** daß die Abstreifkanten (66) der Misch- und Abstreifblätter (56) in Längsrichtung abschnittsweise an gegeneinander versetzten Ausschnitten (68) unterbrochen sind.

16. Vorrichtung nach Anspruch 14 oder 15, **dadurch gekennzeichnet,** daß die Misch- und Abstreifblätter (56) mit an ihren Enden in Umfangsrichtung des Gefrierbehälters (56) gleichsinnig überstehenden hebelartigen Lagerlappen (60,62) an den Auslegern (46,54) schwenkbar gelagert sind.

17. Vorrichtung nach einem der Ansprüche 14 bis 16, **da****durch gekennzeichnet,** daß die Spaltweite (76) zwischen den gegen den Anschlag (74) anliegenden abgehobenen Misch- und Abstreifblättern (56) und der Mantelinnenfläche (50) des Gefrierbehälters (10) an der vorzugsweise im Bereich der Abstreifkanten (66) befindlichen engsten Stelle 3 - 12 mm, vorzugsweise 5 - 7 mm beträgt und vorzugsweise einstellbar ist.

18. Vorrichtung nach einem der Ansprüchw 14 bis 17, **da****durch gekennzeichnet,** daß die Misch- und Abstreifblätter (56) gleichsinnig gegenüber der Wellenachse geneigt sind und zugleich eine zur einen Stirnwand (18) des Gefrierbehälters (10) hin geneigte Vorderfläche und eine zur anderen Stirnwand (30) hin geneigte Rückfläche aufweisen.

19. Vorrichtung nach Anspruch 18, **dadurch gekennzeich****net,** daß die den einzelnen Misch- und Abstreifblättern (56) zugeordneten Ausleger (46,54) parallel zueinander und die Gelenkachsen (70,72) parallel zur Wellenachse (44) ausgerichtet sind.

20. Vorrichtung nach Anspruch 19, **dadurch gekennzeich****net,** daß die beiden Lagerlappen (60,62) der Misch- und Abstreifblätter unterschiedlich lang sind.

21. Vorrichtung nach Anspruch 18, **dadurch gekennzeich****net,** daß die den einzelnen Misch- und Abstreifblättern (56) zugeordneten Ausleger (46,54) im Winkel zueinander über die Welle (44) überstehen, und daß die Gelenkachsen (70,72) schräg zur Wellenachse (44) ausgerichtet sind.

22. Vorrichtung nach Anspruch 21, **dadurch gekennzeich****net,** daß die beiden Lagerlappen (60,62) der Misch- und Abstreifblätter (56) im wesentlichen gleichlang sind.

23. Vorrichtung nach einem der Ansprüche 14 bis 22, **dadurch gekennzeichnet,** daß die Ausleger (46,54) an den beiden Wellenenden einander paarweise diametral gegenüberliegend angeordnet sind, und daß an dem einen Wellenende ein weiteres, sich mit dem ersten Auslegerpaar (46) zu einem gegen die zylindrsiche Mantelinnenfläche (50) des Gefrierbehälters (10) anliegenden Lagerkreuz ergänzendes Auslegerpaar (48) angeordnet ist.

24. Vorrichtung nach Anspruch 23, **gekennzeichnet durch** am lagerkreuzseitigen Wellenende und an der diesem zugewandten Stirnwand angeordnete, zueinander komplementäre, vorzugsweise als Innen- und Außenkonus ausgebildete Zentrier- und/oder Abstandshalteorgane (52).

25. Vorrichtung nach einem der Ansprüche 14 bis 24, **dadurch gekennzeichnet,** daß die Misch- und Abstreifblätter (56) einen aus den Lagerlappen (60, 62) und einem einstückig mit den Lagerlappen verbundenen Steg (58) gebildeten Metallbügel und eine mit der keilförmigen Abstreifkante (66) versehene Stegauflage (64) aus Kunststoff aufweisen.

## Claims

1. Method for producing ice-cream in which ice-cream mass is agitated and/or beaten by a rotating mixing and stripping tool and is applied to a cylindrical cooling surface and stripped from said cylindrical cooling surface once more, characterised in that portions of the ice-cream mass are alternately applied to the cooling surface and then stripped from the cooling surface during several revolutions in separate steps of the method.

2. Method according to claim 1, characterised in that the ice-cream mass is compressed and/or kneaded during application.

3. Method according to claim 1 or 2, characterised in that the stripped portions of ice-cream mass are mixed with the rest of the ice-cream mass.

4. Method according to one of claims 1 to 3, characterised in that the application phase lasts longer than the stripping phase.

5. Method according to one of claims 1 to 4, characterised in that the application phase lasts 5 - 15 seconds, preferentially 8 - 10 seconds.

6. Method according to one of claims 1 to 5, characterised in that the stripping phase lasts 4 - 8 seconds, preferentially 5 - 6 seconds.

7. Method according to one of claims 1 to 6, characterised in that the ice-cream mass is applied to the cooling surface with a coating thickness of 3 - 12 mm, preferentially 5 - 7 mm.

8. Method according to one of claims 1 to 7, characterised in that the ice-cream mass is applied to and stripped from the cooling surface in opposite directions of rotation of the mixing and stripping tool.

9. Method according to claim 8, characterised in that, during application and stripping, the ice-cream mass is additionally displaced over the cooling surface in opposite directions, transversely to the directions of rotation.

10. Method according to one of claims 1 to 9, characterised in that the application and stripping speeds are set independently of one another.

11. Method according to claim 10, characterised in that, during an application phase, the ice-cream mass is applied to the cooling surface at a variable speed.

12. Method according to claim 11, characterised in that, during the application phase, the ice-cream mass is applied to the cooling surface initially with a fast relative rotation and then with a slower relative rotation.

13. Method according to claim 12, characterised by a start-up phase with a slower relative rotation.

14. Device for producing ice-cream with a preferentially fixed freezing container (10), cooled on the jacket side, and a mixing and stripping tool (12) rotating therein which has at least two mixing and stripping blades (56) which are arranged at an angular distance from one another, aligned in the same direction in the circumferential direction of the freezing container (10), extending over the length of the freezing container (10), with a wedge-shaped stripping edge (66) pressable with an oblique angle of attack against the inner surface of the jacket (50) of the freezing container (10) and, in so doing, pointing obliquely with their front surfaces into the inside of the container, said mixing and stripping blades (56) being fixed to extension arms (46, 54) projecting in pairs, spaced in the axial direction, radially over a motor-driven shaft (44) mounted coaxially in the freezing container (10), the direction of rotation (78) of the motor-driven shaft (44) being reversible and the mixing and stripping blades (56) being coupled to the extension arms (46, 54) swivellably about articulated axles (70, 72) which are eccentric to the axis of rotation (44) and being liftable by swivelling about the articulated axles (70, 72), leaving free a gap (76) from the inner surface of the jacket (50) of the freezing container (10), limited by a stop (74), characterised in that, during lifting from the inner surface of the jacket (50), the mixing and stripping blades (56) limit, in the region of their rear surfaces, a gap (76) narrowing towards the stripping edge, that the shaft (44) is driveable alternately in one and in the other direction of rotation, and that the mixing and stripping blades (56) are pressable together against the inner surface of the jacket (50) in one direction of rotation (stripping phase) under the effect of the centrifugal force and of a spring force which may be present and, in the other direction of rotation (application phase) are swivellable away from the inner surface of the jacket (50) as far as the stop (74), against the centrifugal force and the spring force which may be present, under the effect of ice-cream mass adhering to the inner surface of the jacket (50).

15. Device according to claim 14, characterised in that the stripping edges (66) of the mixing and stripping blades (56) are interrupted in sections in the longitudinal direction at cut-outs (68) which are offset with respect to one another.

16. Device according to claim 14 or 15, characterised in that the mixing and stripping blades (56) are swivellably mounted on the extension arms (46, 54) with lever-like mounting lugs (60, 62) projecting in the same direction in the circumferential direction of the freezing container at the ends of said mixing and stripping blades (56)

17. Device according to one of claims 14 to 16, characterised in that the width of the gap (76) between the raised mixing and stripping blades (56) lying against the stop (74) and the inner surface of the jacket (50) of the freezing container (10) is 3 - 12 mm, preferentially 5 - 7 mm, at the narrowest point located preferentially in the region of the stripping edges (66) and is preferentially adjustable.

18. Device according to one of claims 14 to 17, characterised in that the mixing and stripping blades (56) are inclined in the same direction with respect to the shaft axis and, at the same time, have a front surface inclined towards an end wall (18) of the freezing container (10) and a rear surface inclined towards the other end wall (30).

19. Device according to claim 18, characterised in that the extension arms (46, 54) allocated to the individual mixing and stripping blades (56) are aligned parallel to one another and the articulated axles (70, 72) are aligned parallel to the shaft axis (44).

20. Device according to claim 19, characterised in that the two mounting lugs (60, 62) of the mixing and stripping blades are of different length.

21. Device according to claim 18, characterised in that the extension arms (46, 54) allocated to the individual mixing and stripping blades (56) project over the shaft (44) at an angle to one another, and that the articulated axles (70, 72) are at an angle to the shaft axis (44).

22. Device according to claim 21, characterised in that the two mounting lugs (60, 62) of the mixing and stripping blades (56) are of substantially the same length.

23. Device according to one of claims 14 to 22, characterised in that the extension arms (46, 54) are arranged in pairs diametrically opposite to one another on the two shaft ends, and that, on one end of the shaft, a further supplementary pair of extension arms (48) is arranged with the first pair of extension arms (46) to form a mounting cross lying against the cylindrical inner surface of the jacket (50) of the freezing container (10).

24. Device according to claim 23, characterised by centring and/or spacing elements (52), which are complementary to one another, preferentially designed as internal and external cones, on the end of the shaft on the side of the mounting cross and on the end wall facing said mounting cross.

25. Device according to one of claims 14 to 24, characterised in that the mixing and stripping blades (56) have a metal bracket formed from the mounting lugs (60, 62) and a segment (58) connected to form a single piece with the mounting lugs (60, 62) and a segment supporting plate (64) made of plastic provided with the wedge-shaped stripping edge (66).

## Revendications

1. Procédé de préparation de glaces alimentaires, dans lequel la masse de glace est brassée et/ou battue, et étalée sur une surface réfrigérante cylindrique, dont elle est raclée, par un outil rotatif de mélange et de raclage, caractérisé en ce que des portions de la masse de glace, dans des phases alternatives et distinctes du procédé, sont étalées sur la surface réfrigérante pendant plusieurs rotations de l'outil de mélange et de raclage, puis sont raclées de cette surface.

2. Procédé suivant la revendication 1, caractérisé en ce que la masse de glace est comprimée et/ou malaxée lors de l'étalement.

3. Procédé suivant l'une des revendications 1 et 2, caractérisé en ce que les portions de masse de glace raclées sont mélangées au reste de la masse de glace.

4. Procédé suivant l'une quelconque des revendications 1 à 3, caractérisé en ce que la phase d'étalement dure plus longtemps que la phase de raclage.

5. Procédé suivant l'une quelconque des revendications 1 à 4, caractérisé en ce que la phase d'étalement dure de 5 à 15 s, de 8 à 10 s de préférence.

6. Procédé suivant l'une quelconque des revendications 1 à 5, caractérisé en ce que la phase de raclage dure de 4 à 8 s, de 5 à 6 s de préférence.

7. Procédé suivant l'une quelconque des revendications 1 à 6, caractérisé en ce que la masse de glace est étalée sur la surface réfrigérante avec une épaisseur de couche de 3 à 12 mm, de 5 à 7 mm de préférence.

8. Procédé suivant l'une quelconque des revendications 1 à 7, caractérisé en ce que la masse de glace est étalée et raclée sur la surface réfrigérante dans des sens de rotation opposés de l'outil de mélange et de raclage.

9. Procédé suivant la revendication 8, caractérisé en ce que la masse de glace, lors de l'étalement et du raclage, est déplacée en supplément sur la surface réfrigérante à la transversale des sens de rotation, dans des directions mutuellement opposées.

10. Procédé suivant l'une quelconque des revendications 1 à 9, caractérisé en ce que les vitesses d'étalement et de raclage sont réglables indépendamment l'une de l'autre.

11. Procédé suivant la revendication 10, caractérisé en ce que la masse de glace est appliquée sur la surface réfrigérante, pendant une phase d'étalement, à une vitesse variable.

12. Procédé suivant la revendication 11, caractérisé en ce que la masse de glace est d'abord appliquée sur la surface réfrigérante, pendant la phase d'étalement, avec une rotation relative rapide, puis avec une rotation relative plus lente.

13. Procédé suivant la revendication 12, caractérisé par une phase de démarrage avec une rotation relative ralentie.

14. Dispositif pour la préparation de glaces alimentaires, avec un réservoir frigorifique (10) refroidi côté enveloppe, stationnaire de préférence, dans lequel tourne un outil de mélange et de raclage (12), qui présente deux pales de mélange et de raclage (56), au moins, mutuellement disposées à distance angulaire, orientées dans le même sens dans le sens périphérique du réservoir frigorifique (10), s'étendant sur la longueur du réservoir (10), pouvant être pressées par une arête de raclage (66) cunéiforme, sous un angle d'incidence oblique, contre la surface interne (50) de l'enveloppe du réservoir frigorifique (10), et étant alors dirigées à l'oblique, par leur surface avant, à l'intérieur du réservoir, ces pales étant fixées sur des bras (46, 54) qui dépassent par paires, à une certaine distance axiale l'un de l'autre et dans le sens radial, d'un arbre (44) motorisé, monté dans l'axe du réservoir frigorifique (10), l'arbre motorisé (44) ayant un sens de rotation (78) réversible, et les pales de mélange et de raclage (56) étant articulées sur les bras (46, 54) avec une possibilité de pivotement autour d'axes d'articulation (70, 72), excentrés par rapport à l'axe de rotation (44), et pouvant être décollées de la surface interne (50) de l'enveloppe du réservoir frigorifique (10), décollement limité par une butée (74), par un mouvement de pivotement autour des axes d'articulation (70, 72), en dégageant une fente (76), caractérisé en ce que les pales de mélange et de raclage (56), lors de leur décollement de la surface interne (50) de l'enveloppe, délimitent une fente (76) dans la zone de leurs surfaces arrières, qui se rétrécie en direction de l'arête de raclage, en ce que l'arbre (44) est entraînable alternativement dans les deux sens de rotation, et en ce que les pales de mélange et de raclage (56) peuvent être pressées conjointement, par leur arête de raclage (66), contre la surface interne (50) de l'enveloppe, dans l'un des sens de rotation (phase de raclage), sous l'effet de la force centrifuge et d'une force de ressort éventuelle, et être repoussées de la surface interne (50) de l'enveloppe jusqu'à la butée (74), dans l'autre sens de rotation (phase d'étalement), sous l'effet de la masse de glace alimentaire, adhérente sur la surface interne (50), et contre l'effet de la force centrifuge et de la force de ressort éventuelle.

15. Dispositif suivant la revendication 14, caractérisé en ce que les arêtes de raclage (66) des pales de mélange et de raclage (56) sont interrompues par sections, dans le sens longitudinal, par des découpes (68) en déport mutuel.

16. Dispositif suivant l'une des revendications 14 et 15, caractérisé en ce que les pales de mélange et de raclage (56) sont montées avec une possibilité de pivotement sur les bras (46, 54) par des pattes d'appui (60, 62) en forme de levier, qui dépassent dans le même sens sur leurs extrémités, dans le sens périphérique du réservoir frigorifique (10).

17. Dispositif suivant l'une quelconque des revendications 14 à 16, caractérisé en ce que la largeur de la fente (76) entre les pales de mélange et de raclage (56) décollées, qui s'appliquent contre la butée (74), et la surface interne (50) de l'enveloppe du réservoir frigorifique (10), est de 3 à 12 mm, de 5 à 7 mm de préférence, au point le plus étroit situé de préférence dans la zone des arêtes de raclage (66), et est réglable de préférence.

18. Dispositif suivant l'une quelconque des revendications 14 à 17, caractérisé en ce que les pales de mélange et de raclage (56) sont inclinées dans le même sens par rapport à l'axe de l'arbre, et présentent simultanément une surface avant, inclinée en direction d'une paroi frontale (18) du réservoir frigorifique (10), et une surface arrière, inclinée en direction de l'autre paroi frontale (30).

19. Dispositif suivant la revendication 18, caractérisé en ce que les bras (46, 54), associés aux pales individuelles de mélange et de raclage (56), sont parallèles entre eux, les axes d'articulation (70, 72) étant orientés à la parallèle de l'axe de l'arbre (44).

20. Dispositif suivant la revendication 19, caractérisé par une longueur différente des deux pattes d'appui (60, 62) des pales de mélange et de raclage.

21. Dispositif suivant la revendication 18, caractérisé en ce que les bras (46, 54), associés aux pales individuelles de mélange et de raclage (56), dépassent mutuellement en angle de l'arbre (44), et en ce que les axes d'articulation (70, 72) sont orientés à l'oblique par rapport à l'axe de l'arbre (44).

22. Dispositif suivant la revendication 21, caractérisé en ce que les deux pattes d'appui (60, 62) des pales de mélange et de raclage (56) ont essentiellement la même longueur.

23. Dispositif suivant l'une quelconque des revendications 14 à 22, caractérisé en ce que les bras (46, 54) sont diamétralement opposés, par paires, sur les deux extrémités d'arbre, et en ce qu'une autre paire de bras (48), disposée sur l'une des extrémités d'arbre, se complète avec la première paire de bras (46) en une croix d'appui, qui s'applique contre la surface interne (50) de l'enveloppe du réservoir frigorifique (10).

24. Dispositif suivant la revendication 23, caractérisé par des organes de centrage et/ou d'écartement (52) mutuellement complémentaires, réalisés de préférence sous forme de cône interne et externe, et disposés sur l'extrémité d'arbre côté croix d'appui et sur la paroi frontale, tournée vers cette extrémité.

25. Dispositif suivant l'une quelconque des revendications 14 à 24, caractérisé en ce que les pales de mélange et de raclage (56) présentent un étrier métaliique, formé des pattes d'appui (60, 62) et d'une traverse (58), assemblée d'une seule pièce avec les pattes, ainsi qu'un support transversal (64) en matière plastique, muni de l'arête de raclage cunéiforme.
